# EUROPEAN PATENT APPLICATION

(11) **EP 1 619 899 A1**
(43) Date of publication of application: **25.01.2006**
(21) Application number: 04254337.1
(22) Date of filing: 20.07.2004
(51) Int. Cl.: H04N 7/24

(54) **multichannel mobile data communications**

(71) Applicant: MATSUSHITA ELECTRIC INDUSTRIAL CO., LTD., Kadoma-shi, Osaka 571-8501 (JP)
(72) Inventor: King-Smith, Anthony David, Dorking, Surrey RH5 6LL (FR); Page, Mike, Wokingham, Berkshire RG40 3NL (GB)
(74) Representative: Dawson, Elizabeth Ann

(57) **Abstract**

Data is supplied to a mobile node using two or more separate communication channels to the node operating on different frequencies. A stream of basic data is transmitted over one channel and a stream of additional data complementary to the basic data is transmitted over the over channel. The two channels could convey different media of a multimedia presentation, or selective frames from a frame structure transmission. A suitable receiver is adapted to receive, recombine and if necessary synchronise the data for presentation to a user.

## Description

The present invention relates to a method of supplying data through a mobile node using two or more separate communications channels. It is already known, e.g. from GB2364209A, to provide a mobile terminal with respective receivers for receiving digital video broadcast signals and signals transmitted over a cellular channel. This opens up numerous possibilities for optimising the usage of the broadcast and cellular networks respectively. The present invention provides a method of supplying data to a communications node using two or more separate communication channels to the node, the method comprising the steps of transmitting a stream of basic data over one of the channels, transmitting a stream of additional data over at least one other channel, and combining the two data streams at the node, wherein the additional data enhances the basic data.

In the preferred embodiment of the present invention, the basic and additional data streams include audio and/or visual information and the combination of the basic data and the additional data improves the quality of sound and/or image obtainable from the basic data alone. (In this context, "visual" encompasses computer generated images or graphics, video, digital photographs, text and any other information that can be displayed on a screen.) For example, the additional data could improve the spatial resolution of graphics images obtainable from the basic data alone. Alternatively, in a "frame" system using complete frames and "difference" frames, some or all of the difference frames could be transmitted over the other channel so that only a poor quality image and/or sound would be available from the basic data alone.

In another possible embodiment of the invention, the data streams could include audio information separated such that some of the audio frequencies are included in the steam of additional data.

Alternatively, the additional data could be used to improve the frame rate in a video presentation obtainable from the basic data alone.

Another possibility is to include mono audio information in the basic data stream and additional data obtainable from the other channel to improve the sound quality to multichannel sound such as stereo or surround sound.

It should be noted that in this invention the data could be unencrypted. It could then be separated in such a way as to render it useless unless recombined at the receiver. In this way the invention provides a simple method of preventing unauthorised consumption of data.

In another embodiment of the invention, different parts of a multimedia presentation could be transmitted over different channels. For example, the basic data could be video and the related audio information could be transmitted over another channel.

It will be appreciated from the foregoing that the basic data could be transmitted over a broadcast channel and the additional complementary data could be transmitted over a cellular channel. The cellular channel would typically be a subscriber channel.

Access to the additional data carried on a separate channel, whether broadcast or cellular, can be controlled in a number of ways in order to restrict its use:
- access to the data can be controlled by controlling access to the channel carrying it
- the additional data can be encrypted so that only those with the decryption algorithm can gain access to it
- a key to enable the basic and enhanced data to be properly combined could be provided separately, for example via a smart card or other removable memory device inserted into the receiver.

There are a number of possibilities for rendering the additional data useless without a suitable "key". For example the two data streams could be offset in time by an amount which varies according to a predetermined algorithm, the key to which could be provided on a smart card. This would consume less processing power than encryption of data content.

The commercial benefits of this are considerable. For example, basic data could be broadcast free of charge to potential users as a "taster" or "sample" to encourage them to subscribe to a subscriber channel in order to obtain the complementary data. This could be done by any of the known methods such as prepayment or purchase of a key to decrypt a stream of data.

It should be noted also that data could be supplied to the node via an intermediary device which could be another mobile node. For example, the basic data could be broadcast to a receiver (the node), whilst the additional data is "streamed" to a mobile handset via a cellular channel, conveyed via a bluetooth link to the receiver and combined at the receiver.

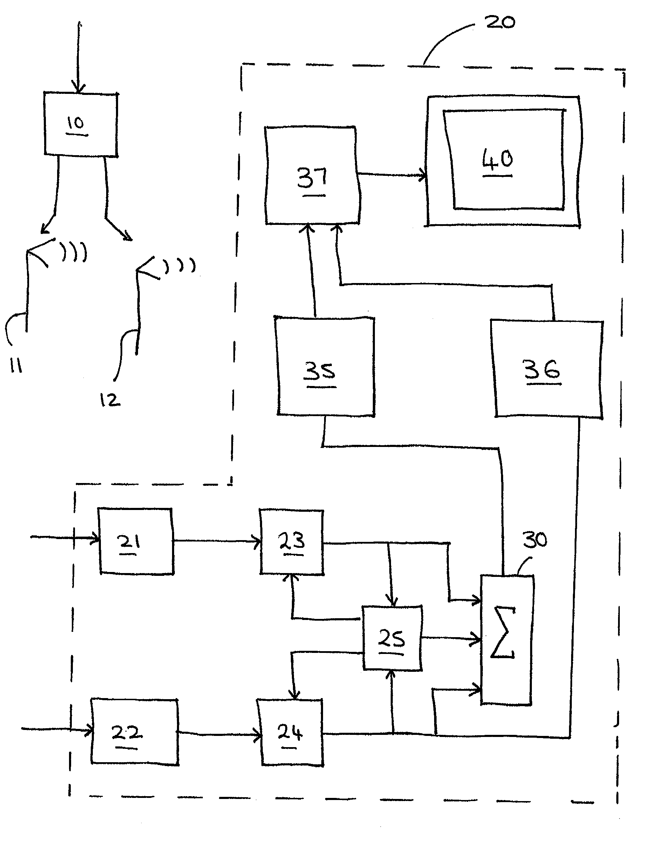

An embodiment of the invention will now be described by way of example only and with reference to the accompanying drawing which is a schematic diagram of a set of components suitable for carrying out the method of the invention.

Referring to the drawing, at the transmission side data to be sent to a user is separated into two information streams by a splitter 10 and supplied to respective transmitters 11 and 12 to be transmitted on respective channels. A receiver 20 will have separate receivers 21, 22 for receiving the respective data streams and received data will be supplied to respective buffers 23, 24. Data stored in the buffers 23, 24 is supplied to a combiner 30 under the control of a synchroniser 25.

Receiver 22 will receive the "basic" data described above. In the case where the basic data is usable on its own and is not to be combined with additional data (e.g. because it has not been paid for/decrypted etc.) only the uncombined output of decoder 36 is used.

The illustrated apparatus has two decoders 35 and 36 each of which supplies signals to a control 37 which controls audio/visual output 40.

In the case where the respective data streams supplied to receivers 21 and 22 were different components of a multimedia presentation, for example, e.g. audio and video respectively, the combiner 30 may not be necessary in which case the two data streams would be supplied directly to respective decoders 36 and 35 via buffers 24 and 23, to be decoded according to different algorithms. Alternatively, the combiner 30 would be used in the situation where the two data streams were different components of the same content, for example frames of a video or audio presentation. In that case they would be combined in combiner 30, decoded by decoder 35 and then supplied to control unit 37.

Depending on the respective contents of the two data streams, decoders 35 and 36 could be replaced by a single decoder provided with a switch to select input either direct from buffer 24 or from combiner 30.

## Claims

1. A method of supplying data to a communications node using two or more separate communication channels to the node, the method comprising the steps of transmitting a stream of basic data over one of the channels, transmitting a stream of additional data over at least one other channel, and combining the two data streams at the node, wherein the additional data enhances the basic data.

2. A method as claimed in claim 1 in which the basic and additional data streams include audio and/or visual information and the combination of the basic data and the additional data improves the quality of sound and/or image obtainable from the basic data alone.

3. A method as claimed in claim 2 in which the data streams include visual information and the combination of the basic data and the additional data improves the spatial resolution of the graphics images obtainable from the basic data alone.

4. A method as claimed in claim 2 or 3 in which the data is transmitted in the form of frames with periodic complete frames containing complete audio or graphics information and periodic intervening frames containing differences between the previous image/sound and the next image/sound, the complete frames being transmitted over one channel and the difference frames being transmitted over another channel.

5. A method as claimed in claim 2, 3 or 4 in which the data streams include audio information and in which some of the audio frequencies are omitted from the basic data stream and included in the stream of additional data.

6. A method as claimed in any of claims 2 to 5 in which the data streams include audio and/or video information in a frame structure in which the combination results in an increased frame rate over that obtainable from the basic data alone.

7. A method as claimed in any of claims 2 to 6 in which the basic data enables single or multichannel audio reproduction at the receiver and the combination enables multichannel audio reproduction on a larger number of channels that the basic data enables.

8. A method as claimed in any preceding claim in which the basic data is unencrypted but incomplete, and requires combination with additional data in order to be usable at the receiver.

9. A method as claimed in any preceding claim in which respective media of a multimedia presentation are separated prior to transmission and transmitted over at least two separate channels.

10. A method as claimed in any preceding claim in which the two channels are transported on a single carrier.

11. A method as claimed in any of claims 1 to 9 in which the two channels operate on different frequencies.

12. A method as claimed in any preceding claim in which the stream of basic data is transmitted over a broadcast channel and at least one other channel conveying additional complementary data is a cellular channel.

13. A method as claimed in claim 12 in which the cellular channel is a subscriber channel.

14. A method as claimed in any preceding claim in which a control algorithm is required to combine the data streams.

15. A method as claimed in claim 14 in which the control algorithm is provided on a removable storage device.

16. A method as claimed in claim 14 or 15 in which a key to the control algorithm is provided on a removable storage device.

17. A mobile node having means for receiving and combining data supplied to it using a method as claimed in any preceding claim.
